(19) Europäisches Patentamt
European Patent Office
Office européen des brevets

(11) **EP 3 854 510 B1**

(12) **EUROPÄISCHE PATENTSCHRIFT**

(45) Veröffentlichungstag und Bekanntmachung des Hinweises auf die Patenterteilung:
**07.02.2024 Patentblatt 2024/06**

(21) Anmeldenummer: **20214038.0**

(22) Anmeldetag: **15.12.2020**

(51) Internationale Patentklassifikation (IPC):
**B23K 11/25** (2006.01)    **B23K 11/08** (2006.01)
**B23K 11/11** (2006.01)    B23K 101/00 (2006.01)
B23K 101/18 (2006.01)

(52) Gemeinsame Patentklassifikation (CPC):
**B23K 11/255; B23K 11/08; B23K 11/115;**
**B23K 11/253; B23K 11/257;** B23K 2101/006;
B23K 2101/18

(54) **VORRICHTUNG FÜR EINE SCHWEISSSTEUERUNG UND VERFAHREN ZUR PLAUSIBILISIERUNG VON KRAFTWERTEN BEI DER STEUERUNG EINES SCHWEISSWERKZEUGS**

WELDING CONTROL DEVICE AND METHOD FOR VALIDATING FORCE VALUES IN THE CONTROL OF A WELDING TOOL

DISPOSITIF DE COMMANDE DE SOUDAGE ET PROCÉDÉ DE PLAUSIBILISATION DES VALEURS DE FORCE LORS DE LA COMMANDE D'UN OUTIL DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2020 DE 102020200616**

(43) Veröffentlichungstag der Anmeldung:
**28.07.2021 Patentblatt 2021/30**

(73) Patentinhaber: **Robert Bosch GmbH**
**70442 Stuttgart (DE)**

(72) Erfinder:
• **Stolze, Josephine**
  **69412 Eberbach (DE)**
• **Herkert, Tobias**
  **64297 Darmstadt (DE)**

(56) Entgegenhaltungen:
EP-A1- 3 760 360       EP-A2- 1 582 285
EP-A2- 2 394 773       GB-A- 2 560 999
US-A1- 2004 112 874

## Beschreibung

Die vorliegende Erfindung bezieht sich auf eine Vorrichtung für eine Schweißsteuerung und ein Verfahren zur Plausibilisierung von Kraftwerten bei der Steuerung eines Schweißwerkzeugs.

EP 1 582 285 A2 zeigt ein Verfahren zum elektrischen Widerstandsschweißen sowie zur Beurteilung der Qualität einer Schweißverbindung. Das Verfahren erlaubt eine Vielzahl von Auswertungen der Qualität der Schweißverbindung durch Auswerten der Positionswerte der Spindel. Die Auswertung der Positionswerte erfolgt mit statistischen Methoden und Verfahren zur Mustererkennung. GB 2560999 A zeigt ein Schweißverfahren zur Kalibrierung eines Schweißkopfes und eine Schweißvorrichtung, bei denen Messungen der wirkenden Kräfte erfolgen. US 2004/0112874 A1 zeigt ein Verfahren und ein System zur Überwachung eines Schweißablaufs. Probleme eines Kraftsensors sind nicht betrachtet.

Metallische Teile können mit einem Schweißwerkzeug verbunden werden. Beispielsweise werden Schweißwerkzeuge in industriellen Anlagen eingesetzt, die insbesondere Fertigungsstraßen für Fahrzeuge usw. sind. Hier werden metallische Teile, insbesondere Bleche, durch Schweißen mit dem Schweißwerkzeug verbunden. Im automatisierten Karosserierohbau wird als Schweißwerkzeug eine Schweißzange mit Elektrodenkappen an Schweißelektroden eingesetzt. Beim Widerstandsschweißen werden die zu verschweißenden Bauteile an der zu verschweißenden Stelle mit zwei Schweißelektroden der Schweißzange zusammengedrückt. Dadurch wird ein Stromkreis gebildet, in welchem mit einem speziellen Stromverlauf zwischen den Bauteilen eine Schweißlinse ausgebildet wird. Beim Punkt-/ Widerstandsschweißen ist eine konstante Qualität der Schweißpunkte sehr wichtig.

Solche Schweißzangen sind beispielsweise als servoelektrische Schweißzangen ausgestaltet, um die Kraft zum Zusammendrücken der Schweißzange zum Bilden des Schweißpunkts aufzubringen. Ist die Kraft zu groß, die in die Schweißzange eingeleitet wird, wird die Schweißzange beschädigt. Daher ist der Einsatz eines Kraftreglers vorteilhaft, um die in die Schweißzange eingeleitete Kraft derart zu dosieren, dass keine Beschädigungen an der Schweißzange bzw. dem Schweißwerkzeug auftreten.

Der Kraftregler verwendet bei der Kraftregelung einen gemessenen Kraftwert oder eine Ist-Kraft. Die Ist-Kraft wird mit einem Kraftsensor gemessen. Problematisch ist jedoch, wenn der Kraftsensor unbemerkt falsche Ist-Kraftwerte bzw. falsche Werte der Ist-Kraft ausgibt. Dies kann auftreten, wenn der Kraftsensor defekt ist oder nicht korrekt angesteuert wird.

Werden falsche Ist-Kraftwerte ausgegeben, so wird bei der Regelung und Überwachung des Betriebs des Schweißwerkzeugs eine falsch gemessene Ist-Kraft verwendet. Dabei kommt es bei einer Kraftregelung des Schweißwerkzeugs, insbesondere einer servolelektrischen Schweißzange, mit falschen Ist-Kraftwerten zur Einstellung falscher Kräfte. Dies kann zu einer schlechten Schweißpunktqualität, wie beispielsweise offene Schweißpunkte, zahlreiche Spritzer, oder dergleichen, und zu Beschädigungen des Schweißwerkzeugs führen.

Daher besteht die Aufgabe der vorliegenden Erfindung darin, eine Vorrichtung für eine Schweißsteuerung und ein Verfahren zur Plausibilisierung von Kraftwerten bei der Steuerung eines Schweißwerkzeugs bereitzustellen, mit welchen die zuvor genannten Probleme gelöst werden können. Insbesondere sollen eine Vorrichtung für eine Schweißsteuerung und ein Verfahren zur Plausibilisierung von Kraftwerten bei der Steuerung eines Schweißwerkzeugs bereitgestellt werden, bei welchen auch bei einem defekten oder falsch angesteuerten Kraftsensor, die erzeugte Kraft derart einstellbar ist, dass eine gleichbleibende Qualität der Schweißverbindungen einfach und kostengünstig realisierbar ist und Beschädigungen an den Schweißwerkzeugen ohne großen Aufwand und kostengünstig vermeidbar sind.

Diese Aufgabe wird durch eine Vorrichtung für eine Schweißsteuerung nach Anspruch 1 gelöst. Die Vorrichtung hat ein Ermittlungsmodul zur Ermittlung eines erwarteten Werts einer physikalischen Größe, die bei einem Schweißvorgang mit einem Schweißwerkzeug auftritt und abhängig von einer Kraft ist, welche mindestens eine Elektrode des Schweißwerkzeugs beim Herstellen einer Schweißverbindung auf mindestens ein Bauteil ausübt, und ein Vergleichsmodul zum Vergleich des erwarteten Werts mit einem Ist-Wert der physikalischen Größe, die bei dem Schweißvorgang mit dem Schweißwerkzeug auftritt, um einen bei dem Schweißvorgang mit dem Schweißwerkzeug erfassten Ist-Wert der Kraft zu plausibilisieren, wobei das Ermittlungsmodul ausgestaltet ist, den erwarteten Wert mit einem Modell des Schweißwerkzeugs zu ermitteln, wie in Anspruch 1 beschrieben.

Die zuvor beschriebene Vorrichtung ermöglicht, falsch gemessene Ist-Kraftwerte, mit anderen Worten falsch gemessene Werte einer Ist-Kraft, durch Auswertung des Ist-Lagewertes zu erkennen. Hierbei kann das Schweißwerkzeug Bauteile mit einer Kraft beaufschlagen oder nicht. Letzteres ist als Teil des Schweißvorgangs oder bei einer Inbetriebnahme oder Wartung durchführbar.

Damit kommt es auch bei einem falsch gemessenen Ist-Kraftwert nicht zu Beschädigungen an dem Schweißwerkzeug. Noch dazu wird erreicht, dass kostenintensive Serviceeinsätze zur Behebung von Störungen der Schweißanlage weniger häufig gefordert sind. In Folge dessen verbessert die Vorrichtung die Lebensdauer des Schweißwerkzeugs signifikant.

Zudem kann auch sichergestellt werden, dass die gewünschte Qualität der hergestellten Schweißverbindungen erzielt werden kann. Beispielsweise sind Schweißspritzer und eine daraus resultierende schlechte Schweißpunktqualität unter Kraftregelung bei einem falsch gemessenen, insbesondere zu groß gemessenen, Kraftistwert vermeidbar. Es wird somit real nicht fälschlicherweise ein zu kleiner Ist-Kraftwert verwendet.

Ein zusätzlicher Vorteil besteht darin, dass Fehlschlüsse bei der Auswertung der falsch gemessenen Ist-Kraft vermieden werden. Dies ist beispielsweise bei der Schweißprozessüberwachung sehr hilfreich einsetzbar. Außerdem sind falsche Reaktionen der Schweißsteuerung vermeidbar, die beispielsweise bei der Schweißprozessregelung auftreten können.

Darüber hinaus kann ein Schweißen mit der Vorrichtung schneller abgebrochen werden. Dadurch wird der von einer industriellen Anlage produzierte Ausschuss vermindert.

Insgesamt sind dadurch Ausfälle der Schweißanlage in der industriellen Anlage minimierbar. Dadurch kann letztlich der Ausstoß der industriellen Anlage erhöht werden.

Im Ergebnis kann die Vorrichtung eine Steuerung des Schweißwerkzeugs mit einer Schweißsteuerung derart ermöglichen, dass eine hohe Qualität der mit dem Schweißwerkzeug hergestellten Schweißverbindungen sichergestellt wird.

Vorteilhafte weitere Ausgestaltungen der Vorrichtung sind in den abhängigen Patentansprüchen angegeben.

Das Modell modelliert das Schweißwerkzeug als Feder und weist mindestens einen die Feder bestimmenden Parameter auf.Denkbar ist, dass der mindestens eine die Feder bestimmende Parameter eine Ersatzfederkonstante ist, die mindestens eine Federkonstante in Bezug auf die mechanischen Eigenschaften des Schweißwerkzeugs und eine Federkonstante in Bezug auf die Eigenschaften des mindestens einen zu schweißenden Bauteils aufweist.

Denkbar ist zusätzlich oder alternativ, dass der mindestens eine die Feder bestimmende Parameter eine Totzeit ist, die nach Beaufschlagung des Schweißwerkzeugs mit der Kraft den Kraftaufbau zum Herstellen der Schweißverbindung verzögert.

In einer speziellen Ausgestaltung kann das Ermittlungsmodul ausgestaltet sein, eine Änderung der die Feder bestimmenden Parameter bei einem Schweißvorgang zu berücksichtigen.

Das Vergleichsmodul ist ausgestaltet, den Schweißvorgang abzubrechen und optional eine Fehlermeldung als Meldung an die Schweißsteuerung auszugeben, wenn eine Differenz aus erwarteten Wert und Ist-Wert der physikalischen Größe größer als ein vorbestimmter Grenzwert ist.

Gemäß der Erfindung ist die physikalische Größe die Lage der mindestens einen Elektrode des Schweißwerkzeugs und das Modell umfasst eine modellierte Armaufbiegung des Schweißwerkzeugs. Alternativ oder zusätzlich ist die physikalische Größe der Antriebstrom einer Antriebseinrichtung zum Antrieb der mindestens einen Elektrode des Schweißwerkzeugs. Alternativ oder zusätzlich ist die physikalische Größe ein Drehmoment der Antriebseinrichtung zum Antrieb der mindestens einen Elektrode des Schweißwerkzeugs.

Optional ist das Ermittlungsmodul ausgestaltet, für mindestens zwei verschiedene physikalische Größen jeweils einen erwarteten Wert zu ermitteln, wobei das Vergleichsmodul ausgestaltet ist, den Vergleich für die mindestens zwei verschiedenen physikalischen Größen auszuführen, um den bei dem Schweißvorgang mit dem Schweißwerkzeug erfassten Ist-Wert der Kraft zu plausibilisieren.

Gemäß einer anderen Option ist die Vorrichtung ausgestaltet, eine vorbestimmte Gewichtung des Vergleichs für die mindestens zwei verschiedenen physikalischen Größen zu verwenden, um zu bestimmen, ob zunächst nur eine Warnmeldung als Meldung auszugeben ist, wobei die Vorrichtung ausgestaltet ist, eine Meldung zum Abrechen des Schweißvorgangs erst auszugeben, wenn der Vergleich für mindestens zwei verschiedene physikalische Größen den Ist-Wert der Kraft nicht plausibilisiert.

Die zuvor beschriebene Vorrichtung kann Teil einer Schweißsteuerung für ein Schweißwerkzeug sein, die zudem ein Kraftregelmodul zum Regeln eines Verlaufs einer Kraft aufweist, welche mindestens eine Elektrode eines Schweißwerkzeugs beim Herstellen einer Schweißverbindung auf mindestens ein Bauteil ausübt. Die Schweißsteuerung kann ausgestaltet sein, einen Schweißvorgang abzubrechen, wenn die Vorrichtung einen bei dem Schweißvorgang mit dem Schweißwerkzeug erfassten Ist-Wert der Kraft nicht plausibilisieren kann.

Die zuvor beschriebene Schweißsteuerung kann zudem ein Einstellmodul zur Auswertung der Regelung des Kraftregelmoduls aufweisen, wobei das Einstellmodul ausgestaltet ist, das Schweißwerkzeug als Feder zu modellieren und mindestens einen Reglerparameter des Kraftregelmoduls auf der Grundlage von mindestens einem die Feder bestimmenden Parameter einzustellen.

Die zuvor beschriebene Vorrichtung kann Teil einer Schweißanlage sein, die zudem ein Schweißwerkzeug, das mindestens eine Elektrode zum Herstellen einer Schweißverbindung an mindestens einem Bauteil aufweist, und eine Schweißsteuerung zur Steuerung eines Herstellens einer Schweißverbindung mit dem Schweißwerkzeug aufweist. Die Schweißsteuerung kann ausgestaltet sein, einen Schweißvorgang abzubrechen, wenn die Vorrichtung einen bei dem Schweißvorgang mit dem Schweißwerkzeug erfassten Ist-Wert der Kraft nicht plausibilisieren kann.

Das Schweißwerkzeug ist ein Widerstandsschweißwerkzeug, das als Schweißzange mit zwei Elektroden ausgestaltet ist.

Die Aufgabe wird zudem durch ein Verfahren zur Plausibilisierung von Kraftwerten bei der Steuerung eines Schweißwerkzeugs nach Anspruch 14 gelöst. Das Verfahren wird mit einer Vorrichtung für eine Schweißsteuerung ausgeführt und hat die Schritte Ermitteln, mit einem Ermittlungsmodul, eines erwarteten Werts einer physikalischen Größe, die bei einem Schweißvorgang mit einem Schweißwerkzeug auftritt und abhängig von einer Kraft ist, welche mindestens eine Elektrode des Schweißwerkzeugs beim Herstellen einer Schweißverbindung auf mindestens ein Bauteil ausübt, und Vergleichen, mit einem Vergleichsmodul, des erwarteten Werts mit einem Ist-Wert der physikalischen Größe, die bei dem Schweißvorgang mit dem Schweißwerkzeug auftritt, um einen bei dem Schweißvorgang mit dem Schweißwerkzeug erfassten Ist-Wert der Kraft zu plausibilisieren, wobei das Ermittlungsmodul den erwarteten Wert mit einem Modell des Schweißwerkzeugs ermittelt, wie in Anspruch 14 beschrieben.

Das Verfahren erzielt die gleichen Vorteile, wie sie zuvor in Bezug auf die Vorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:

Fig. 1 eine stark vereinfachte schematische Ansicht einer industriellen Anlage mit einer Schweißanlage gemäß einem ersten Ausführungsbeispiel, die eine Schweißsteuerung zum Steuern eines Schweißwerkzeugs und eine Vorrichtung zum Plausibilisieren von Ist-Kraftwerten am Schweißwerkzeug verwendet;

Fig. 2 eine Schnittansicht von Schweißelektroden des Schweißwerkzeugs gemäß dem ersten Ausführungsbeispiel in einem Betriebszustand, wenn das Schweißwerkzeug noch nicht zum Schweißen bereit ist;

Fig. 3 eine Schnittansicht von Schweißelektroden des Schweißwerkzeugs gemäß dem ersten Ausführungsbeispiel in einem Betriebszustand, wenn das Schweißwerkzeug zum Schweißen bereit ist und eine Schweißverbindung hergestellt wird;

Fig. 4 ein Schaubild eines Ersatzmodells einer C-Zange als Reihenschaltung von drei Federn;

Fig. 5 ein Zeitverlaufsdiagramm der Ist-Kraft bei einem speziellen Beispiel für einen Eingangssprung der Geschwindigkeit der Zangenschließbewegung $v_{ACT}$;

Fig. 6 eine vereinfachte Ansicht eines Regelkreises gemäß dem ersten Ausführungsbeispiel zur Regelung der Kraft, die bei Durchführen eines Schweißvorgangs oder Servicevorgangs von dem Schweißwerkzeug auf die Schweißstelle aufgebracht wird;

Fig. 7 ein Flussdiagramm eines Verfahrens, das von der Vorrichtung gemäß dem ersten Ausführungsbeispiel zum Plausibilisieren von Ist-Kraftwerten am Schweißwerkzeug ausgeführt wird;

Fig. 8 ein Schaubild einer Vorrichtung zum Plausibilisieren von Ist-Kraftwerten bei einem Schweißwerkzeug gemäß einem zweiten Ausführungsbeispiel; und

Fig. 9 ein Schaubild einer Vorrichtung zum Plausibilisieren von Ist-Kraftwerten bei einem Schweißwerkzeug gemäß einem dritten Ausführungsbeispiel.

In den Figuren sind gleiche oder funktionsgleiche Elemente, sofern nichts anderes angegeben ist, mit denselben Bezugszeichen versehen.

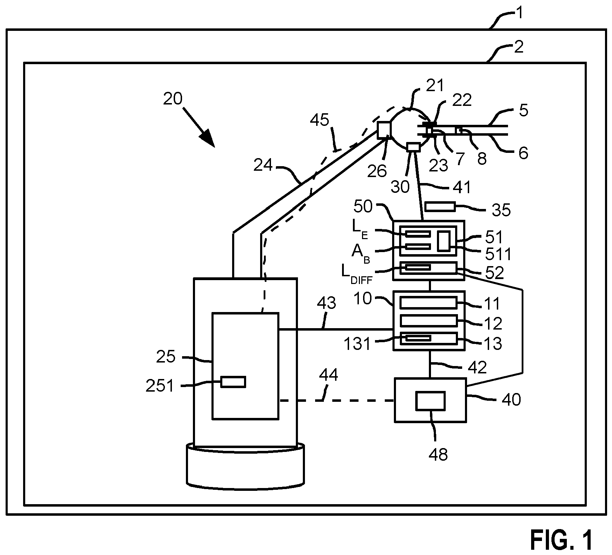

Fig. 1 zeigt eine industrielle Anlage 1 mit einer Schweißanlage 2, die zum Schweißen von mindestens einem metallischen Bauteil 5, 6 verwendet wird. Hierbei wird das mindestens eine metallische Bauteil 5, 6 mit mindestens einer Schweißverbindung 7 verbunden. Die mindestens eine Schweißverbindung 7 ist beispielsweise ein Schweißpunkt und/oder eine Schweißnaht. Dabei können die zwei metallischen Bauteile 5, 6 oder nur zwei Ränder eines der Bauteile 5, 6 miteinander verbunden werden. Ungewollt können beim Schweißen Schweißspritzer 8 auftreten.

Die industrielle Anlage 1 ist beispielsweise eine Fertigungsstraße für Fahrzeuge, Möbel, Bauwerke, usw., in welcher die metallischen Bauteile 5, 6 geschweißt werden. Hierzu weist die Schweißanlage 2 eine Schweißsteuerung 10, eine erste Vorrichtung 20 zum Führen eines als Widerstandschweißwerkzeug ausgeführten Schweißwerkzeugs 21 mit zwei Schweißelektroden 22, 23, eine Erfassungseinrichtung 30, die Daten 35 liefert, eine Bedieneinrichtung 40 und eine zweite Vorrichtung 50 auf. Die erste Vorrichtung 20 wird von einer Steuereinrichtung 25 gesteuert. Zudem sind Kommunikationsleitungen 41 bis 45 vorgesehen, die insbesondere als Bussystem ausgeführt sein können. Mit der Bedieneinrichtung 40 sind Meldungen 48 ausgebbar, insbesondere Statusmeldungen und/oder Fehlermeldungen und/oder sonstige Informationen. Die zweite Vorrichtung 50 dient zum Plausibilisieren zumindest eines Teils der Daten 35.

Die Vorrichtung 20 ist insbesondere ein Roboter. Die Bedieneinrichtung 40 ist beispielsweise als Tastatur und/oder eine Maus, ein Laptop, ein berührungsempfindlicher oder berührungsunempfindlicher Bildschirm, usw. oder deren Kombinationen ausführbar.

Gemäß Fig. 1 ist das Schweißwerkzeug 21 eine Schweißzange mit mindestens einer Elektrode 22, 23. Insbesondere ist das Schweißwerkzeug 21 eine servoelektrische Schweißzange. Bei dem Beispiel von Fig. 1 ist die Schweißzange als eine C-Zange ausgebildet. Hierbei ist es möglich, dass einer der Zangenarme, an dessen Ende beispielsweise die Elektrode 22 angeordnet ist, ein beweglicher Zangenarm ist und der andere Zangenarm, an dessen Ende beispielsweise die Elektrode 23 angeordnet ist, ein feststehender Zangenarm ist. An dem feststehenden Zangenarm kann die Erfassungseinrichtung 30, insbesondere ihr Kraftsensor, vorgesehen sein. Selbstverständlich sind andere Varianten zur Ausführung des Schweißwerkzeugs 21 und/oder der Anordnung der Erfassungseinrichtung 30 an dem Schweißwerkzeug 21 möglich.

Die Schweißsteuerung 10 dient zur Steuerung des Schweißwerkzeugs 21. Daher ist die Schweißsteuerung 10 mit dem Schweißwerkzeug 21 bzw. dessen elektrischen Komponenten über die Kommunikationsleitung 41 verbunden. Die Schweißsteuerung 10 ist außerdem über die Kommunikationsleitung 42 mit der Bedieneinrichtung 40 verbunden. Zudem empfängt die Schweißsteuerung 10 über die Kommunikationsleitung 41 Daten 35, die beim Betrieb des Schweißwerkzeugs 21 von der Erfassungseinrichtung 30 erfasst wurden. Die Erfassungseinrichtung 30 hat hierzu mindestens einen Sensor zum Erfassen von physikalischen Größen, die beim Schweißen relevant sind und nachfolgend als die Daten 35 bezeichnet sind. Derartige physikalische Größen bzw. Daten 35 umfassen insbesondere eine Halte- und/oder Anpresskraft Fs zum Halten des Schweißwerkzeugs 21 an dem mindestens einen Bauteil 5, 6 und/oder Anpressen der Elektroden 22, 23 an das mindestens eine Bauteil 5, 6 beim Ausführen eines Schweißvorgangs zur Herstellung einer Schweißverbindung 7.

Somit hat die Erfassungseinrichtung 30 insbesondere mindestens einen Kraftsensor. Zusätzlich oder alternativ kann die Erfassungseinrichtung 30 insbesondere mindestens einen Lagesensor aufweisen, beispielsweise einen Drehgeber und/oder einen Gyrosensor und/oder einen Bewegungssensor. Zusätzlich kann die Erfassungseinrichtung 30 mindestens einen Sensor zur Erfassung mindestens einer elektrischen Größe beim Schweißvorgang haben.

Die Schweißsteuerung 10 hat ein Einstellmodul 11, ein Kraftregelmodul 12 und ein Speichermodul 13. Das optionale Einstellmodul 11 dient zum Einstellen von Reglerparametern des Kraftregelmoduls 12, optional durch Auswerten der Daten 35, die in dem Speichermodul 13 gespeichert werden.

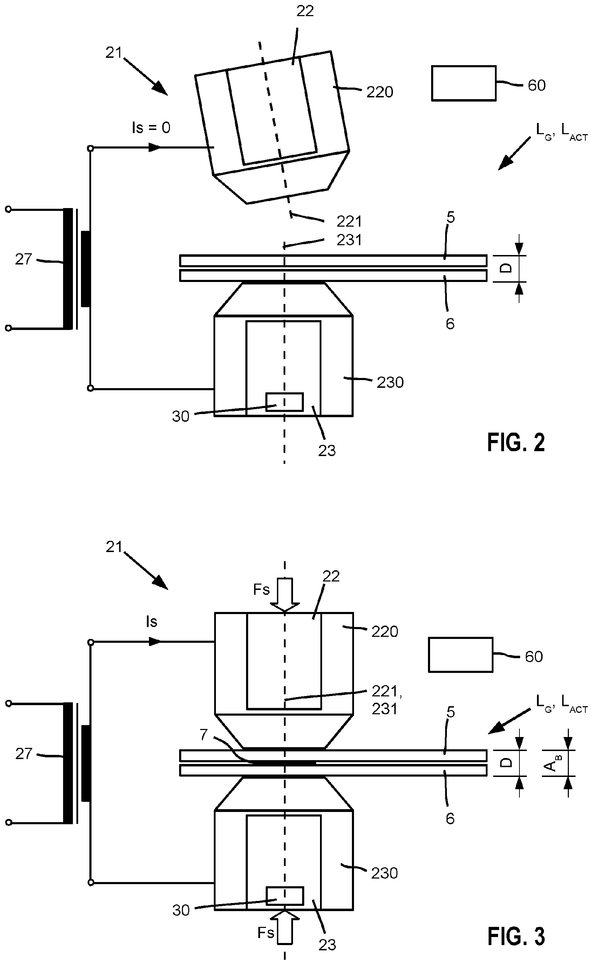

Für die Steuerung eines Schweißvorgangs mit dem Schweißwerkzeug 21 sind in der Schweißsteuerung 10, genauer gesagt ihrem Speichermodul 13, zudem interne Grundparameter bzw. Sollwerte 131 gespeichert, die entweder ab Werk oder später mit Hilfe der Bedieneinrichtung 40 von einem Benutzer eingegeben werden können. Die internen Grundparameter oder Sollwerte 131 können Parameter des Schweißwerkzeugs 21 sein. Zudem können die internen Grundparameter oder Sollwerte 131 Parameter der Schweißsteuerung 10 sein, mit welchen das Schweißwerkzeug 21 gesteuert wird. Insbesondere sind die internen Grundparameter oder Sollwerte 131 ein Phasenanschnitt eines Schweißstroms Is und/oder ein Widerstand R des Schweißwerkzeugs 21 und/oder die Halte- und/oder Anpresskraft Fs und/oder mindestens ein Grenzwert, der verwendet wird, um zu bestimmen, ob an der Bedieneinrichtung 40 eine Meldung 48 auszugeben ist, insbesondere eine Statusmeldung und/oder Fehlermeldung und/oder sonstige Informationen. Der Schweißstrom Is wird dem Schweißwerkzeug 21 durch einen in Fig. 1 nicht dargestellten Schweißtransformator zugeführt. Dies ist in Bezug auf Fig. 2 näher beschrieben.

Alle internen Grundparameter oder Sollwerte 131 sind als zeitlich abhängige Größen oder Soll-Zeitverläufe der jeweiligen Sollgrößen speicherbar. Somit sind insbesondere ein Schweißstrom Is(t) und/oder ein Widerstand R(t) des Schweißwerkzeugs 21 und/oder die Halte- und/oder Anpresskraft Fs(t) speicherbar. Dabei sind kontinuierliche Zeitverläufe oder intermittierend festgelegte Zeitverläufe speicherbar.

Die Erfassungseinrichtung 30 gibt zumindest einen Teil ihrer Daten 35 an die zweite Vorrichtung 50 aus. Die Daten 35 umfassen insbesondere eine vorbestimmte Lage $L_G$ der Elektroden 22, 23 bzw. mindestens der Lage der Elektrode 22 an dem beweglichen Zangenarm und/oder eine zeitlich veränderliche Ist-Lage $L_{ACT}$ der Elektroden 22, 23 bzw. mindestens der zeitlich veränderlichen Ist-Lage $L_{ACT}$ der Elektrode 22 an dem beweglichen Zangenarm und die beim Schweißvorgang erfasste Ist-Kraft $F_{S\_ACT}$ der Halte- und/oder Anpresskraft Fs. Danach kann die Vorrichtung 50 die Daten 35 an die Schweißsteuerung 10 weitergeben.

Die zweite Vorrichtung 50 hat ein Ermittlungsmodul 51 und ein Vergleichsmodul 52. Das Ermittlungsmodul 51 dient zum Ermitteln, insbesondere Berechnen, einer erwarteten Ist-Lage $L_E$ der Elektroden 22, 23. Dabei verwendet die Vorrichtung 50 ein Modell 511 des Schweißwerkzeugs 21 zur Ermittlung einer modellierten Stellung des Schweißwerkzeugs 21, insbesondere einer Armaufbiegung $A_B$ des Schweißwerkzeugs 21. Das Vergleichsmodul 52 dient zum Vergleich des Ergebnisses der Ermittlung mit der Ist-Lage $L_{ACT}$, dem Lageistwert, der Elektroden 22, 23 des Schweißwerkzeugs 21. Je nach Ergebnis des Vergleichs des Vergleichsmoduls 52, steuert das Vergleichsmodul 52 die Schweißsteuerung 10 an, den Schweißvorgang abzubrechen oder nicht. Zudem kann das Vergleichsmodul 52 je nach Ergebnis des Vergleichs die Bedieneinrichtung 40 ansteuern, eine Fehlermeldung als Meldung 48 auszugeben oder nicht. Dies ist nachfolgend noch genauer beschrieben.

Beim Führen des Schweißwerkzeugs 21 mit einem Arm 24 der Vorrichtung 20 wird die Vorrichtung 20 von ihrer Steuereinrichtung 25 gesteuert. Hierfür ist die Steuereinrichtung 25 mit der Schweißsteuerung 10 über die Kommunikationsleitung 43 verbunden. Optional ist die Steuereinrichtung 25 mit der Bedieneinrichtung 40 über eine Kommunikationsleitung 44 verbunden. Das Öffnen oder Schließen des Schweißwerkzeugs 21 erfolgt durch den Antrieb einer Antriebseinrichtung 26.

Zusätzlich oder alternativ ist die Steuereinrichtung 25 direkt mit der Erfassungseinrichtung 30 und/oder den elektrischen Komponenten des Schweißwerkzeugs 21 mit Hilfe einer Kommunikationsleitung 45 verbunden. Besteht kein Redundanzbedarf, ist es möglich, die Kommunikationsleitung 43 wegzulassen.

Über die Kommunikationsleitungen 42 bis 45 können relevante Daten für die Durchführung einer Schweißung mit dem Schweißwerkzeug 21 zwischen der Schweißsteuerung 10 und der Vorrichtung 20, genauer gesagt der Steuereinrichtung 25, und/oder der Bedieneinrichtung 40 ausgetauscht werden. Zudem können in der Steuereinrichtung 25 interne Grundparameter oder Sollwerte 251 der Steuereinrichtung 25 gespeichert sein, mit welchen das Schweißwerkzeug 21, insbesondere für seine Positionierung im Raum und daher an den Bauteilen 5, 6 gesteuert wird.

Fig. 2 zeigt den Aufbau der Elektroden 22, 23 des Schweißwerkzeugs 21 bei dem vorliegenden Ausführungsbeispiel genauer. Demzufolge ist die Elektrode 22 als Elektrodenschaft ausgebildet, der an seinem einen Ende mit einer Elektrodenkappe 220 versehen ist. Die Elektrodenkappe 220 ist an der Elektrode 22 an ihrem dem Bauteil 5 zugewandten Ende angeordnet. Die Elektrodenkappe 220 hat eine Achse 221. Die Achse 221 ist identisch mit der Achse der Elektrode 22. Außerdem ist die Elektrode 23 als Elektrodenschaft ausgebildet, der mit einer Elektrodenkappe 230 versehen ist. Die Elektrodenkappe 230 ist an der Elektrode 23 an ihrem dem Bauteil 6 zugewandten Ende angeordnet. Die Elektrodenkappe 230 hat eine Achse 231. Die Achse 231 ist identisch mit der Achse der Elektrode 23.

Bei dem Beispiel von Fig. 2 ist die Elektrode 22 an dem beweglichen Zangenarm des Schweißwerkzeugs 21 montiert. Die Elektrode 23 ist an dem feststehenden Zangenarm des Schweißwerkzeugs 21 montiert. Bei dem vorliegenden Beispiel sind die Zangenarme des Schweißwerkzeugs 21 geöffnet. Dadurch stehen die Achsen 221, 231 quer zueinander. Das mindestens eine Bauteil 5, 6 hat dagegen zwischen den Elektroden 22, 23, genauer gesagt deren Elektrodenkappen 220, 230, eine Dicke D.

Der Betriebszustand von Fig. 2 liegt beim Anordnen des Schweißwerkzeugs 21 an einer zu verschweißenden Stelle an den Bauteilen 5, 6 vor. In diesem Betriebszustand ist das Schweißwerkzeug 21 noch nicht bereit zum Schweißen. Daher wird von einem Schweißtransformator 27 noch kein Schweißstrom Is zugeführt.

Das Schweißwerkzeug 21 kann mit einer sehr schematisch dargestellten Reinigungseinrichtung 60, die als Fräs- und/oder Schneideinrichtung oder Austauscheinrichtung ausgeführt sein kann, derart bearbeitet werden, dass der verschmutzte Teil einer der Elektrodenkappen 220, 230 bei Bedarf abgeschnitten oder abgefräst wird. Die Elektrodenkappen 220, 230 sind demzufolge Verschleißobjekte.

Wie in Fig. 3 veranschaulicht, werden die Elektroden 22, 23 im Betrieb des Schweißwerkzeugs 21 an beiden Seiten der zu verschweißenden Stelle an das mindestens eine Bauteil 5, 6 angeordnet und mit Hilfe einer Halte- und/oder Anpresskraft Fs an das mindestens eine Bauteil 5, 6 angesetzt. Dadurch sind die Achsen 221, 231 im Idealfall auf einer Linie angeordnet.

Anders ausgedrückt, bei dem Betriebszustand von Fig. 3 spannen die beiden Elektroden 22, 23 die Bauteile 5, 6 mit der Kraft Fs ein. Die Elektroden 22, 23 sind je nach Anzahl der bereits durchgeführten Fräs- und/oder Schneidvorgänge an den Elektrodenkappen 220, 230 unterschiedlich weit an das mindestens eine Bauteil 5, 6 zuzustellen, um die gewünschte Kraft Fs zu erzielen.

Bei diesem Zustand, bei dem das Schweißwerkzeug 21 geschlossen ist und eine Kraft Fs aufgebaut worden ist, entsteht eine Armaufbiegung $A_B$. Die Zangenarme des Schweißwerkzeugs 21 verhalten sich wie eine Feder, wie nachfolgend noch genauer beschrieben.

Anschließend wird den Elektroden 22, 23 mit Hilfe eines Schweißtransformators 27 ein Schweißstrom Is für eine vorbestimmte Zeitdauer T und in einer vorbestimmten Charakteristik zugeführt. Hierfür wird der Strom Is mit definiertem Stromverlauf, insbesondere mindestens teilweise geregelt, zugeführt. Dadurch entsteht Wärme in dem mindestens einen Bauteil 5, 6, so dass sich eine Schweißlinse ausbildet, die später die Schweißverbindung 7 bildet.

Wie zuvor erwähnt, werden im Betrieb des Schweißwerkzeugs 21 Daten 35 mit der Erfassungseinrichtung 30 erfasst. Zur Plausibilisierung zumindest eines Teils der Daten 35 geht die Vorrichtung 50 folgendermaßen vor.

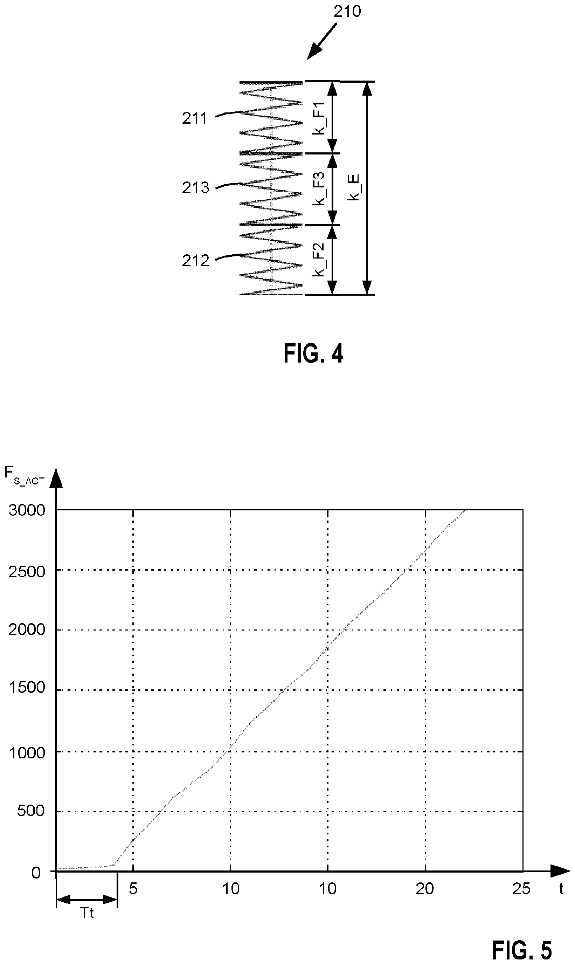

Die Vorrichtung 50 verwendet das Modell 511 des Schweißwerkzeugs 21, um eine modellierte Stellung des Schweißwerkzeugs 21 zu ermitteln, insbesondere einer Armaufbiegung $A_B$ des Schweißwerkzeugs 21. Dabei nimmt das Modell 511 das Schweißwerkzeug 21 als Feder an. Demzufolge ist dem Schweißwerkzeug 21 in dem Modell 511 eine Ersatzfederkonstante k_E zugewiesen, wie in Bezug auf Fig. 4 näher erläutert ist.

Die Armaufbiegung $A_B$ des Schweißwerkzeugs 21 bei dem Schweißvorgang und/oder im Laufe des Schweißvorgangs berechnet sich in dem Modell 511 somit aus der Ist-Kraft $F_{S\_ACT}$ der Halte- und/oder Anpresskraft Fs beim Schweißvorgang als

$$A_B = F_{S\_ACT} / k\_E \qquad\qquad \ldots (1)$$

Gemäß Gleichung (1) ist die Armaufbiegung $A_B$ des Schweißwerkzeugs 21 abhängig von der Ist-Kraft $F_{S\_ACT}$ der Halte- und/oder Anpresskraft Fs. Das heißt, umso größer die Ist-Kraft $F_{S\_ACT}$ der Halte- und/oder Anpresskraft Fs ist, umso größer ist die Armaufbiegung $A_B$. Bei geöffneten Zangenarmen des Schweißwerkzeugs 21 ist die Ist-Kraft $F_{S\_ACT} = 0$. Damit ist in diesem Zustand auch die Armaufbiegung $A_B = 0$.

Im Laufe des Schweißvorgangs nimmt die Ist-Kraft $F_{S\_ACT}$ aufgrund der Wärmeausdehnung des Materials des mindestens einen Bauteils 5, 6 nach Einleiten des Strom Is zu. Dagegen nimmt die Ist-Kraft $F_{S\_ACT}$ nach Aufschmelzen des mindestens einen Bauteils 5, 6 für die Schweißverbindung 7 ab. Treten Schweißspritzer 8 auf, nimmt die Ist-Kraft $F_{S\_ACT}$ ebenfalls ab. Somit ist die Ist-Kraft $F_{S\_ACT}$ und dadurch auch die Armaufbiegung $A_B$ des Schweißwerkzeugs 21 im Laufe des Schweißvorgangs zeitlich veränderlich.

Fig. 4 zeigt ein Ersatzmodell 210 des Schweißwerkzeugs 21, das dem Modell 511 zugrunde liegt und das von der Vorrichtung 50 verwendet wird. Das Ersatzmodell 210 modelliert das Schweißwerkzeug 21 als Feder, genauer gesagt als eine Reihenschaltung von Federn 211, 212, 213. Hierbei ist die Feder 213 zwischen den Federn 211, 212 angeordnet. Die Gesamtfeder, und damit die modellierte Schweißzange 21, ist durch eine Ersatzfederkonstante k_E und eine Totzeit Tt bestimmt. Die Totzeit Tt ist in Fig. 5 veranschaulicht, in welcher die Ist-Kraft $F_{S\_ACT}$ der Halte- und/oder Anpresskraft Fs über der Zeit t bei einem Eingangssprung der Ist-Geschwindigkeit der Zangenbewegung $v_{ACT}$ veranschaulicht ist. Bei dem Beispiel von Fig. 5 ist die Ist-Kraft $F_{S\_ACT}$ in der physikalischen Einheit N angegeben und die Zeit t in der physikalischen Einheit ms.

Die Feder 211 steht für die mechanischen Eigenschaften des ersten Zangenarms des Schweißwerkzeugs 21, der hier beweglich ist. Die Feder 212 steht für die mechanischen Eigenschaften des zweiten Zangenarms des Schweißwerkzeugs 21, der hier feststehend ist. Die Feder 213 steht für die mechanischen Eigenschaften des mindestens einen Bauteils 5, 6.

Die Feder 211 hat eine Federkonstante k_F1. Die Feder 212 hat eine Federkonstante k_F2. Die Feder 213 hat eine Federkonstante k_F3. Durch die Reihenschaltung ergibt sich eine Gesamtfederkonstante oder die Ersatzfederkonstante k_E gemäß Gleichung (2)

$$1/k\_E = 1/k\_F1 + 1/k\_F2 + 1/k\_F3 \qquad\qquad \ldots (2)$$

Die Gesamtfederkonstante oder Ersatzfederkonstante k_E ist somit immer kleiner als jede einzelne Federkonstante k_F1, k_F2 + k_F3. Demzufolge ergibt der Zusammenschluss der Federn 211 bis 213 eine weichere Gesamtfeder. Die über der Zeit t veränderliche Kraft $F_S(t)$ wirkt bei der Reihenschaltung der Federn 211 bis 213 an jeder der Federn 211 bis 213 mit dem gleichen Betrag.

Die Vorrichtung 50 kann, beispielsweise bei der Inbetriebnahme der Schweißanlage 2 und/oder des Schweißwerkzeugs 21, die Ersatzfederkonstante k_E aus der folgenden Gleichung (3) berechnen.

$$k\_E = \Delta F_{S\_ACT} / \Delta s_{ACT} = \Delta F_{S\_ACT} / v_{ACT} * \Delta t \qquad \ldots (3)$$

Hierbei ist $\Delta F_{S\_ACT}$ die Differenz der erfassten Kraft, die sich ergibt, wenn mindestens ein Zangenarm des Schweißwerkzeugs 21 für eine vorbestimmte Zeitdauer $\Delta t$ mit einer vorbestimmten konstanten Geschwindigkeit $v_{ACT}$ angetrieben wird. Dabei werden die Zangenarme, also die Federn 211, 212, und somit auch die Feder 213 um einen Weg $\Delta s_{ACT}$ zusammengedrückt.

Ist die Ersatzfederkonstante k_E und/oder die Totzeit Tt ermittelt, insbesondere unter Verwendung einer Kraftmessdose, werden die ermittelte Ersatzfederkonstante k_E und/oder die ermittelte Totzeit Tt in den Daten 35 in dem Modell 511 und gegebenenfalls zusätzlich in dem Speichermodul 13 gespeichert. Daher kann die Vorrichtung 50 bei nachfolgenden Schweißvorgängen mit dem Schweißwerkzeug 21 die Ersatzfederkonstante k_E und/oder die Totzeit Tt verwenden.

Alternativ ist es möglich, die Armaufbiegung $A_B$ stattdessen als Funktion der Ist-Kraft $F_{S\_ACT}$ als Polynom 1. bis 3. Ordnung mit der folgenden Gleichung (4) zu ermitteln:

$$A_B = a * F_{S\_ACT}^3 + b * F_{S\_ACT}^2 + c * * F_{S\_ACT} + d \qquad \ldots (4)$$

Die Identifikation der Koeffizienten a, b, c und d wird mit einem Approximationsverfahren durchgeführt, welches nach vorausgegangenen Messungen die relative Abweichung zwischen berechneten und gemessenen Werten der Armaufbiegung $A_B$ über den gesamten Einsatzbereich des Schweißwerkzeugs 21 minimiert. Zum Einsatz kommt hierbei das Verfahren der kleinsten Fehlerquadrate. Die Bestimmung der Ersatzfederkonstante k_E ist ein Spezialfall dieses Verfahrens, bei dem die Koeffizienten a, b und d auf null gesetzt werden. Ist c die Ersatzfederkonstante k_E, ergibt sich als Gleichung (5)

$$AB = c * F_{S\_ACT} = k\_E * F_{S\_ACT} \qquad \ldots (5)$$

Bei geschlossenem Schweißwerkzeug 21, wobei kein Bauteil 5, 6 mit einer Dicke D zwischen den Elektroden 22, 23 angeordnet ist, sind die Elektroden 22, 23 und somit deren Elektrodenkappen 220, 230 in einer vorbestimmten Lage $L_G$ angeordnet. Diese Lage $L_G$ wird als Ist-Lage bei geschlossenem Schweißwerkzeug 21 bezeichnet.

Somit geht die Vorrichtung 50 zur Plausibilisierung der Daten 35 folgendermaßen vor. Insbesondere ermittelt das Ermittlungsmodul 51 bei Durchführen eines Schweißvorgangs die erwartete Lage $L_E$ der Elektroden 22, 23 als

$$L_E = L_G - D + A_B \qquad \ldots (6)$$

Das Vergleichsmodul 52 berechnet anschließend mit der aktuellen Lage oder Ist-Lage $L_{ACT}$ der Elektroden 22, 23 beim Schweißvorgang eine Lagedifferenz $L_{DIFF}$ als Differenz aus der aktuellen Lage oder Ist-Lage $L_{ACT}$ der Elektroden 22, 23 beim Schweißvorgang und der von dem Ermittlungsmodul 51 ermittelten erwarteten Lage $L_E$ als

$$L_{DIFF} = L_{ACT} - L_E \qquad \ldots (7)$$

Ist die Lagedifferenz $L_{DIFF}$ zu groß, also übersteigt der Betrag von $L_{DIFF}$ einen vorbestimmten Grenzwert, der in den internen Grundparametern oder Sollwerten 131 gespeichert ist, steuert das Vergleichsmodul 52 die Schweißsteuerung 10 an, den Schweißvorgang abzubrechen. Zudem steuert das Vergleichsmodul 52 optional die Bedieneinrichtung 40 an, als Meldung 48 eine Fehlermeldung auszugeben. Im Ergebnis wird keine fehlerhafte Schweißverbindung 7 hergestellt.

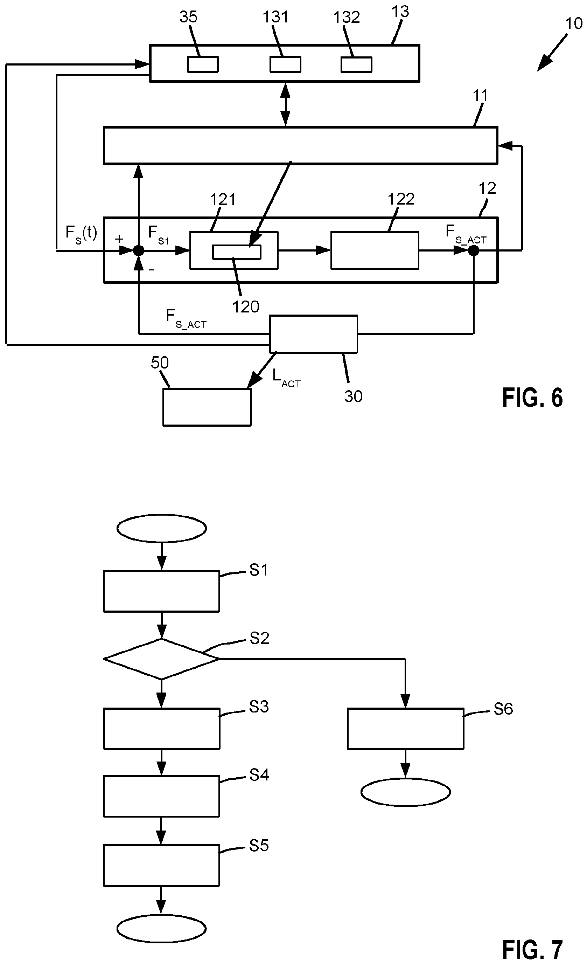

Fig. 6 veranschaulicht den Aufbau des mit dem Kraftregelmodul 12 gebildeten Regelkreises für die Halte- und/oder Anpresskraft Fs bei einem Schweißvorgang mit dem Schweißwerkzeug 21.

Die Regelstrecke 122 ist eine integrierende Strecke (I-Strecke). Außerdem existiert die Totzeit Tt, die zwischen Einleiten und Wirken der Kraft $F_S$ auf das Schweißwerkzeug 21 wirkt. Bei der Regelstrecke 122 tritt somit eine zeitliche Verzögerung beim Aufbau der Kraft $F_S(t)$ in Form der Totzeit Tt auf, wie zuvor in Bezug auf Fig. 5 beschrieben.

Bei dem Schweißvorgang wird eine Schweißverbindung 7 hergestellt. Fig. 6 zeigt somit das Kraftregelmodul 12 und seine Verschaltung mit dem Einstellmodul 11, dem Speichermodul 13, der Erfassungseinrichtung 30 und der Vorrichtung 50 genauer. In dem Speichermodul 13 sind zudem die Daten 35 speicherbar, unter anderem eine von der Erfassungseinrichtung 30 beim Schweißvorgang erfasste Ist-Kraft $F_{S\_ACT}$ der Halte- und/oder Anpresskraft Fs und/oder die Ist-Lage $L_{ACT}$. Außerdem sind in dem Speichermodul 13 die Grundparameter und Sollgrößen 131 gespeichert, unter anderem eine zeitabhängige Soll-Kraft Fs(t) für die Halte- und/oder Anpresskraft und der Grenzwert für die Lagedifferenz $L_{DIFF}$. Noch dazu sind in dem Speichermodul 13 die Einstellparameter 132 des Einstellmoduls 11 speicherbar.

Das Kraftregelmodul 12 hat einen Regler 121 mit speziell eingestellten Reglerparametern 120 und eine Regelstrecke 122. Wie nachfolgend genauer erläutert ist, ist der Regler 121 bei dem vorliegenden Beispiel ein PD-Regler. Der PD-Regler ist eine Kombination aus Proportionalregler und Differentialregler. Die Regelstrecke 112 ist derjenige Teil des mit dem Kraftregelmodul 12 gebildeten Regelkreises, der die zu regelnde physikalische Größe enthält, nämlich hier die Halte- und/oder Anpresskraft Fs. Optional sind zusätzlich andere physikalische Größen regelbar, insbesondere die Ist-Lage $L_{ACT}$.

Die aktuell wirkende Kraft $F_{S\_ACT}$ wird von der Erfassungseinrichtung 30 erfasst, genauer gesagt ihrem mindestens einen Kraftsensor. Das Erfassungsergebnis der Kraft $F_{S\_ACT}$ wird wieder dem PD-Regler 121 zugeführt, wie in Fig. 6 gezeigt.

Der PD-Regler 121 wirkt somit auf die Differenz von Sollgröße, also der Soll-Kraft Fs(t) der Halte- und/oder Anpresskraft Fs, und der erfassten Ist-Kraft $F_{S\_ACT}$ der Halte- und/oder Anpresskraft Fs. In Folge dessen stellt sich eine Kraft $F_{S\_ACT}$ ein, die beim Schweißvorgang auf die Elektroden 22, 23 und somit auf das mindestens eine Bauteil 5, 6 wirkt.

Das Einstellmodul 11 kann optional die Reglerparameter 120 einstellen. Hierbei können die Reglerparameter 120 optimiert werden, die für die gewünschte Schweißqualität mit dem derzeit verwendeten Schweißwerkzeug 21 benötigt werden. Optional kann das Einstellmodul 11 die eingestellten Reglerparameter 120 im laufenden Betrieb der Schweißanlage weiter anpassen. Hierbei ist beispielsweise eine Analyse der Regelabweichung $F_{S1} = Fs(t) - F_{S\_ACT}$ ausführbar.

Bei einem Verfahren zur Plausibilisierung der Werte der Ist-Kraft $F_{S\_ACT}$ geht die Vorrichtung 50 folgendermaßen vor. Das Verfahren ist in Fig. 7 veranschaulicht.

Das Verfahren von Fig. 7 zur Plausibilisierung der Werte der Ist-Kraft $F_{S\_ACT}$ und zum Steuern eines Schweißwerkzeugs 21 wird beispielsweise für die Herstellung einer Schweißverbindung 7 bei einem Schweißvorgang durchgeführt. Bei dem Schweißvorgang ist im Normalfall die Beaufschlagung mit einem Schweißstrom Is vorgesehen. Alternativ kann das Verfahren von Fig. 7 jedoch bei einem Servicevorgang durchgeführt, also ohne Beaufschlagung mit einem Schweißstrom $I_S$.

Bei einem Schritt S1 ermittelt das Ermittlungsmodul 51 die erwartete Lage $L_E$ der Elektroden 22, 23 des Schweißwerkzeugs 21, wie zuvor beschrieben. Das Ermittlungsmodul 51 leitet die ermittelte Lage $L_E$ an das Vergleichsmodul 52 weiter. Danach geht der Fluss zu einem Schritt S2 weiter.

Bei dem Schritt S2 bestimmt das Vergleichsmodul 52, ob die Lagedifferenz $L_{DIFF}$ betragsmäßig größer als der vorbestimmte Grenzwert ist. Ist die Lagedifferenz $L_{DIFF}$ betragsmäßig kleiner als der vorbestimmte Grenzwert, geht der Fluss zu einem Schritt S3 weiter. Andernfalls, also wenn die Lagedifferenz $L_{DIFF}$ betragsmäßig größer als der vorbestimmte Grenzwert ist, geht der Fluss zu einem Schritt S6 weiter.

Bei dem Schritt S3 wird der Schweißvorgang ausgeführt. Somit wird unter Steuerung der Schweißsteuerung 10 die Schweißverbindung 7 mit dem Schweißwerkzeug 21 an dem mindestens einen Bauteil 5, 6 hergestellt, wie zuvor beschrieben. Anschließend geht der Fluss zu einem Schritt S4 weiter.

Bei dem Schritt S4 wird geprüft, ob die bei dem Schritt S3 hergestellte Schweißverbindung 7 die vorgegebenen Qualitätsanforderungen erfüllt. Anschließend geht der Fluss zu einem Schritt S5 weiter.

Bei dem Schritt S5 wird das Ergebnis der Prüfung des Schritts S4 in dem Speichermodul 13 gespeichert. Alternativ oder zusätzlich wird das Ergebnis der Prüfung des Schritts S4 als eine entsprechende Meldung 48 an der Bedieneinrichtung 40 ausgegeben. Die Ausgabe kann insbesondere optisch und/oder akustisch erfolgen. Danach ist das Verfahren beendet.

Bei dem Schritt S6, also wenn die Lagedifferenz $L_{DIFF}$ betragsmäßig größer als der vorbestimmte Grenzwert ist, wird der Schweißvorgang abgebrochen bzw. nicht ausgeführt. Optional kann zusätzlich eine entsprechende Meldung 48 an der Bedieneinrichtung 40 ausgegeben werden. Die Ausgabe kann insbesondere optisch und/oder akustisch erfolgen. Danach ist das Verfahren beendet.

Das zuvor beschriebene Verfahren von Fig. 7 kann entweder vor jedem Schweißvorgang ausgeführt werden, oder vor jedem Servicevorgang, wie beispielsweise einem Reinigungsvorgang mit der Reinigungsvorrichtung 60. Ganz allgemein kann die Plausibilisierung der Kraftwerte der Kraft Fs bei jedem Schließen des Schweißwerkzeugs 21 durchgeführt werden, bei dem die Ist-Kraft $F_{S\_ACT}$ gemessen wird, also beispielsweise vor einem Schweißvorgang (mit Schweißstrom) oder vor einem Servicevorgang (ohne Schweißstrom), beispielsweise Fräsen, Setzhub, oder dergleichen.

Im Unterschied zu der vorangehenden Beschreibung, bei der das Modell 511 die Federkonstante k_F1 des feststehenden Zangenarms für das jeweilige Schweißwerkzeug 21 als konstant annimmt, kann die Federkonstante k_F1 des feststehenden Zangenarms jedoch für die verschiedenen Schweißwerkzeuge 21 während der Lebensdauer des Schweißwerkzeugs 21 durch mechanische Abnutzungserscheinungen variieren. Außerdem kann es durch das Erwärmen des Schweißwerkzeugs 21 während des Schweißens zu einer Änderung der Federkonstante k_F1 kommen. Bei Bedarf kann die Federkonstante k_F1 daher zeitlich variierbar sein. Diese Variation kann im Laufe der Lebensdauer des Schweißwerkzeugs 21 und/oder bei einem Schweißvorgang und/oder im Laufe eines Schweißvorgangs erfolgen.

Außerdem nimmt das Modell 511 die Federkonstante k_F2 des beweglichen Zangenarms für das jeweilige Schweißwerkzeug 21 als konstant an. Die Federkonstante k_F2 des beweglichen Zangenarms kann jedoch für die verschiedenen Schweißwerkzeuge 21 während der Lebensdauer des Schweißwerkzeugs 21 durch mechanische Abnutzungserscheinungen variieren. Außerdem kann es durch das Erwärmen des Schweißwerkzeugs 21 während des Schweißens zu einer Änderung der Federkonstante k_F2 kommen. Bei Bedarf kann die Federkonstante k_F2 daher zeitlich variierbar sein. Diese Variation kann im Laufe der Lebensdauer des Schweißwerkzeugs 21 und/oder bei einem Schweißvorgang und/oder im Laufe eines Schweißvorgangs erfolgen.

Dagegen berücksichtigt das Modell 511, dass sich die Federkonstante k_F3 des mindestens einen Bauteils 5, 6 in einer Zeitspanne zwischen den Reinigungsvorgängen mit der Reinigungsvorrichtung 60 mit der Zeit t ändert. Die Änderung der Federkonstante k_F3 tritt bei Durchführung eines Schweißvorgangs auf. Beispielsweise tritt eine Änderung aufgrund des wärmebedingten Ausdehnens und aufgrund des Aufschmelzens der Bauteile 5, 6 auf.

Da die Kraftplausibilisierung vor Beginn der Schweißzeit durchgeführt wird, spielen diese Störeinflüsse/Änderungen der Ersatzfederkonstante in diesem Zusammenhang keine Rolle.

Zudem kann das Einstellmodul 11 die Reglerparametrierung 120 abhängig von der geänderten Ersatzfederkonstante k_E ändern.

Gemäß einer Modifikation des vorliegenden Ausführungsbeispiels wertet das Einstellmodul 11 nicht die Regelabweichung $F_{S1}$ aus, wie zuvor beschrieben. Stattdessen wertet die Schweißsteuerung 10, insbesondere ihr Einstellmodul 11, das Frequenzspektrum der Ist-Kraft $F_{S\_ACT}$ aus. Hierbei verwendet die Schweißsteuerung 10, insbesondere ihr Einstellmodul 11, eine FFT-Analyse (FFT = Fast Fourier Transformation). Sind in dem Frequenzspektrum der Ist-Kraft $F_{S\_ACT}$ Maxima erkennbar, dann deutet dies auf eine Schwingung hin. Somit wertet das Einstellmodul 11 die Maxima als ein Vorliegen einer Kraftschwingung. Auch auf diese Weise können Kraftschwingungen erkannt und vermieden werden.

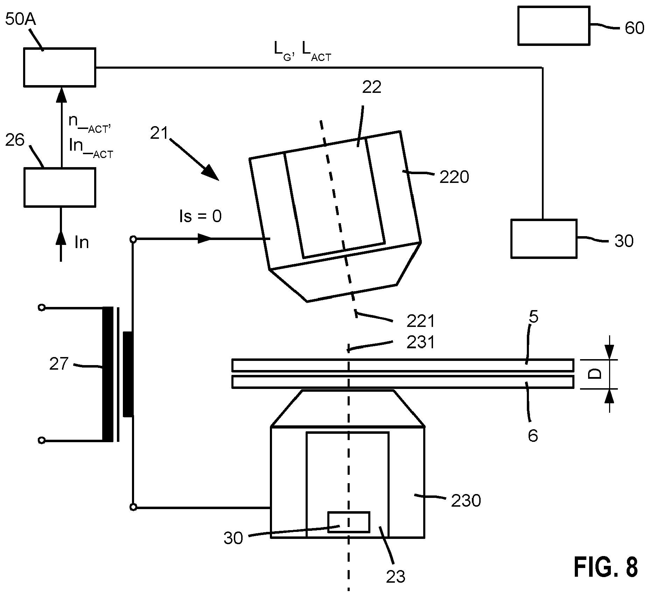

Fig. 8 zeigt eine Vorrichtung 50A und einen Teil eines Schweißwerkzeugs 21, das bei einem zweiten Ausführungsbeispiel verwendbar ist. Das Schweißwerkzeug 21 hat eine Antriebseinrichtung 26 zum Antrieb des Schweißwerkzeugs 21 zur Veränderung der Armaufbiegung $A_B$. Hierbei wird die Antriebseinrichtung 26 mit einem Antriebsstrom In versorgt, so dass die Antriebseinrichtung 26 mit einer vorbestimmten Drehzahl n angetrieben wird.

Die Vorrichtung 50A ist im Unterschied zu der Vorrichtung 50 gemäß dem vorangehenden Ausführungsbeispiel ausgestaltet, zusätzlich den Ist-Antriebsstrom $In\_ACT$ in die Plausibilitätsprüfung mit einzubeziehen. Hierfür verwendet das Modell 511 einen Referenzantriebsstrom oder erwarteten Antriebsstrom $I_E$ als Funktion der Ist-Kraft $F_{S\_ACT}$ und einer Drehmomentkonstante $k_m$.

Somit ermittelt das Ermittlungsmodul 51 bei Durchführen eines Schweißvorgangs den erwarteten Antriebsstrom $I_E$ als

$$I_E = (F_{S\_ACT} * kv) / (2\pi * k_m) \qquad (8)$$

Das Vergleichsmodul 52 berechnet anschließend mit dem aktuellen Strom In oder dem Ist-Antriebsstrom $In\_ACT$ der Antriebseinrichtung 26 beim Schweißvorgang eine Stromdifferenz $I_{DIFF}$ gemäß Gleichung (9) als

$$I_{DIFF} = In\_ACT - I_E \qquad \ldots (9)$$

Es wird also die Differenz aus dem aktuellen Strom oder Ist-Antriebsstrom $In\_ACT$ beim Schweißvorgang und dem von dem Ermittlungsmodul 51 ermittelten erwarteten Antriebsstrom $I_E$ berechnet.

Ist die Stromdifferenz $I_{DIFF}$ zu groß, also übersteigt der Betrag von $I_{DIFF}$ einen vorbestimmten Grenzwert, steuert das Vergleichsmodul 52 die Schweißsteuerung 10 an, den Schweißvorgang abzubrechen. Optional steuert das Vergleichsmodul 52 zudem die Bedieneinrichtung 40 an, als Meldung 48 eine Fehlermeldung auszugeben. Im Ergebnis wird keine fehlerhafte Schweißverbindung 7 hergestellt. Der vorbestimmte Grenzwert kann als interner Grundparameter bzw. Sollwert 131 in dem Speichermodul 13 gespeichert sein.

Durch die Kombination der Ermittlungen des Ermittlungsmoduls 51 für die Lage $L\_ACT$ der Elektroden 22, 23 und des Ist-Antriebsstroms $In\_ACT$ der Antriebseinrichtung 26 beim Schweißvorgang ist eine noch bessere und/oder sicherere Erkennung und Reaktion auf fehlerhaft gemessene Kraftwerte der Kraft Fs durchführbar.

Gemäß einer Modifikation des vorliegenden Ausführungsbeispiels verwendet die Vorrichtung 50A auch Parameter der Antriebseinrichtung 26, um die Ist-Lage $L\_ACT$ der Elektroden 22, 23 beim Schweißvorgang zu ermitteln. Insbesondere bei einer servoelektrischen Schweißzange als Schweißwerkzeug 21 kann ein Drehgeber zur Erfassung der Ist-Lage $L\_ACT$ der Elektroden 22, 23 genutzt werden. Der Drehgeber liefert der Erfassungseinrichtung 30 Ist-Lagewerte, die der Position des beweglichen Zangenarmes, also bei dem vorliegenden Beispiel der Position der Elektrode 22, entsprechen. Somit ist ein separater Lagesensor nicht erforderlich.

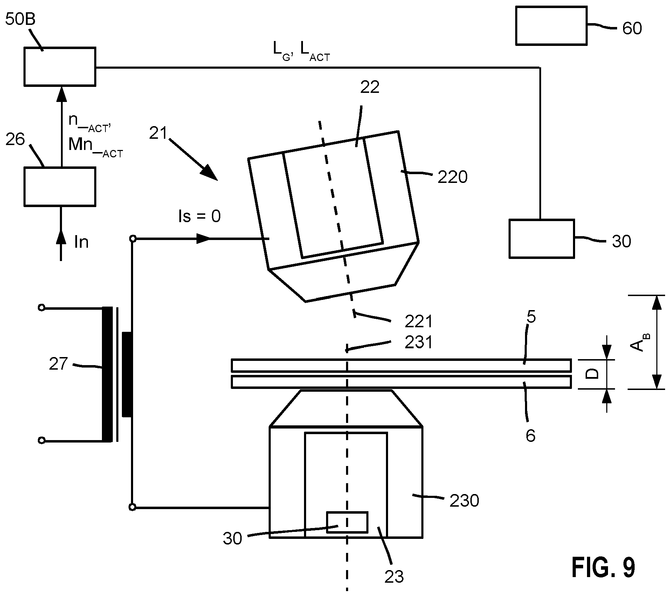

Fig. 9 zeigt eine Vorrichtung 50B und einen Teil eines Schweißwerkzeugs 21, das bei einem dritten Ausführungsbeispiel verwendbar ist. Die Vorrichtung 50B ist im Unterschied zu einer der Vorrichtungen 50, 50A gemäß den vorangehenden Ausführungsbeispielen ausgestaltet, zusätzlich das Ist-Drehmoment $Mn\_ACT$ in die Plausibilitätsprüfung mit einzubeziehen. Hierfür verwendet das Modell 511 ein Referenzdrehmoment oder erwartetes Drehmoment $M_E$ als Funktion der Ist-Kraft $F_{S\_ACT}$.

Somit ermittelt das Ermittlungsmodul 51 bei Durchführen eines Schweißvorgangs das erwartete Drehmoment $M_E$ aus dem Lastdrehmoment $M_L$ und dem Beschleunigungsdrehmoment $M_B$ bzw. aus der Ist-Kraft $F_{S\_ACT}$ mit einer Vorschubkonstante kv, die sich aus der Ist-Vorschubgeschwindigkeit $v_{ACT}$ der mindestens einen Elektrode 22, 23 der Schweißzange 21 und der Ist-Drehzahl $n_{ACT}$ der Antriebseinrichtung 26 berechnet, als

$$\begin{aligned} M_E &= M_L + M_B \\ &= F_{S\_ACT} * kv / 2\pi + M_B \\ &= F_{S\_ACT} * (v_{ACT} / n_{ACT}) / 2\pi + 2\pi * J_{ges} * d(n_{act} - n_{act,0})/dt \qquad \ldots (10) \end{aligned}$$

Dabei ergibt sich gemäß Gleichung (10) das Beschleunigungsdrehmoment $M_B$ aus dem Gesamtträgheitsmoment $J_{ges}$ des Schweißwerkzeugs 21 und der Ableitung nach der Zeit t einer Differenz aus der Ist-Drehzahl $n_{ACT}$ der Antriebseinrichtung 26 und einem Anfangswert der Ist-Drehzahl $n_{ACT,0}$ der Antriebseinrichtung 26 zum Zeitpunkt t = 0.

Das Vergleichsmodul 52 berechnet anschließend mit dem aktuellen Drehmoment oder dem Ist-Drehmoment $Mn\_{ACT}$ der Antriebseinrichtung 26 beim Schweißvorgang eine Drehmomentdifferenz $M_{DIFF}$ gemäß Gleichung (11) als

$$M_{DIFF} = Mn\_{ACT} - M_E \qquad \ldots(11)$$

Es wird also die Differenz aus dem aktuellen Drehmoment oder dem Ist-Drehmoment $Mn\_{ACT}$ beim Schweißvorgang und dem von dem Ermittlungsmodul 51 ermittelten erwarteten Drehmoment $M_E$ berechnet.

Ist die Drehmomentdifferenz $M_{DIFF}$ zu groß, also übersteigt der Betrag von $M_{DIFF}$ einen vorbestimmten Grenzwert, steuert das Vergleichsmodul 52 die Schweißsteuerung 10 an, den Schweißvorgang abzubrechen. Optional steuert das Vergleichsmodul 52 zudem die Bedieneinrichtung 40 an, als Meldung 48 eine Fehlermeldung auszugeben. Im Ergebnis wird keine fehlerhafte Schweißverbindung 7 hergestellt. Der vorbestimmte Grenzwert kann als interner Grundparameter bzw. Sollwert 131 in dem Speichermodul 13 gespeichert sein.

Durch die Kombination der Ermittlungen des Ermittlungsmoduls 51 für die Lage $L\_{ACT}$ der Elektroden 22, 23 und des Ist-Drehmoment $Mn\_{ACT}$ der Antriebseinrichtung 26 beim Schweißvorgang ist eine noch bessere und/oder sicherere Erkennung und Reaktion auf fehlerhaft gemessene Kraftwerte der Kraft Fs durchführbar.

Gemäß einem vierten Ausführungsbeispiel ist das Schweißwerkzeug 21 als eine X-Zange ausgebildet. Die Elektroden 22, 23 sind bei den genannten Schweißzangen vorzugsweise als wassergekühlte Elektrodenschäfte ausgeführt.

Alle zuvor beschriebenen Ausgestaltungen der Schweißanlage 2, der Schweißsteuerung 10, der Vorrichtung 50, 50A, 50B, des Einstellmoduls 11, des Kraftregelmoduls 12 und der Verfahren können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Denkbar ist, dass zumindest eine der Vorrichtungen 50, 50A, 50B nicht als separate Vorrichtung 50, 50A, 50B vorgesehen ist, sondern Teil der Schweißsteuerung 10 ist.

Selbstverständlich ist es möglich, dass bei dem zweiten und/oder dritten Ausführungsbeispiel eine vorbestimmte Gewichtung festgelegt sein kann, mit welcher die Ausgabe einer Fehlermeldung als Meldung 48 erfolgt. Das heißt beispielsweise, wird die zulässige Stromdifferenz $I_{DIFF}$ überschritten, jedoch die zulässige Lagedifferenz $L_{DIFF}$ noch nicht, gibt die Vorrichtung 50A zunächst nur eine Warnmeldung aus und bricht den Schweißvorgang erst ab, wenn beide Differenzen $I_{DIFF}$, $L_{DIFF}$ überschritten werden. Dergleichen gilt zudem bei einer Kombination des zweiten und dritten Ausführungsbeispiels. Damit kann zumindest eine der Vorrichtungen 50, 50A, 50B ausgestaltet sein, eine Meldung zum Abrechen des Schweißvorgangs erst auszugeben, wenn der Vergleich für mindestens zwei verschiedene physikalische Größen den Ist-Wert der Kraft Fs(t), $Fs\_{ACT}$ nicht plausibilisiert.

Mit der Schweißsteuerung 10 ist eine simulative Reglerparametrierung möglich. Die Reglerparametrierung kann für einen Kraftregler und/oder einen Drehzahlregler erfolgen. Insbesondere kann das Kraftregelmodul 12 mindestens einen Drehzahlsollwert n_S an die Antriebseinrichtung 26 des Schweißwerkzeugs 21 ausgeben, um den Antrieb des Schweißwerkzeugs 21 zum Aufbringen der Kraft Fs(t), $F_{S\_ACT}$ mit einem Drehzahlregler der Antriebseinrichtung 26 zu regeln. Alternativ ist die Regelung einer anderen physikalischen Größe möglich.

Die Simulation der Reglerparametrierung kann mit MATLAB Simulink unterstützt werden.

Das Schweißwerkzeug 21 muss nicht als Schweißzange ausgeführt sein, sondern kann nur eine Schweißelektrode 22 oder 23 usw. aufweisen.

Optional kann auf beiden Seiten, also nicht nur bei der Elektrode 22 oder nur bei der Elektrode 23, sondern über die beiden Elektroden 22, 23 eine entsprechende Einleitung von Kräften Fs erfolgen.

Möglich ist außerdem, einen anderen Regler 121 als einen PD-Regler zu verwenden. In diesem Fall werden andere Reglerparameter des Reglers 121 geändert, um die Schwingungen der Kraft Fs zu vermeiden. Hierbei ist es alternativ möglich, dass mehrere Regler 121 hintereinandergeschaltet sind. Wird beispielsweise ein Zweipunktregler anstelle eines PD-Reglers verwendet, würde eine weniger dynamische und regelungstechnisch weniger vorteilhafte Lösung als die zuvor beschriebene Lösung mit PD-Regler geschaffen. Hier müssten dann die für den Zweipunktregler passenden Parameter angepasst werden, um Schwingungen zu vermeiden.

**Patentansprüche**

1. Vorrichtung (50; 50A; 50B) für eine Schweißsteuerung (10), mit

   einem Ermittlungsmodul (51) zur Ermittlung eines erwarteten Werts ($L_E$, $I_E$, $M_E$) einer physikalischen Größe, die bei einem Schweißvorgang mit einem Schweißwerkzeug (21) auftritt und abhängig von einer Kraft (F$_S$(t); F$_{S\_ACT}$) ist, welche mindestens eine Elektrode (22, 23) des Schweißwerkzeugs (21) beim Herstellen einer Schweißverbindung (7) auf mindestens ein Bauteil (5, 6) ausübt, wobei das Schweißwerkzeug (21) ein Widerstandsschweißwerkzeug ist, das als Schweißzange mit zwei Elektroden (22, 23) ausgestaltet ist, und

einem Vergleichsmodul (52) zum Vergleich des erwarteten Werts (L$_E$, I$_E$, M$_E$) mit einem Ist-Wert (L$_{ACT}$, In$_{\_ACT}$, Mn$_{\_ACT}$) der physikalischen Größe, die bei dem Schweißvorgang mit dem Schweißwerkzeug (21) auftritt, um einen bei dem Schweißvorgang mit dem Schweißwerkzeug (21) erfassten Ist-Wert der Kraft (Fs(t); F$_{S\_ACT}$) zu plausibilisieren,

wobei das Ermittlungsmodul (51) ausgestaltet ist, den erwarteten Wert (L$_E$, I$_E$, M$_E$) mit einem Modell (511) des Schweißwerkzeugs (21) zu ermitteln,

wobei das Modell (511) das Schweißwerkzeug (21) als Feder (211, 212, 213) modelliert und mindestens einen die Feder (211, 212, 213) bestimmenden Parameter (k_E, Tt) aufweist,

wobei das Vergleichsmodul (52) ausgestaltet ist, den Schweißvorgang abzubrechen und optional eine Fehlermeldung als Meldung (48) an die Schweißsteuerung (10) auszugeben, wenn eine Differenz aus erwarteten Wert (L$_E$, I$_E$, M$_E$) und Ist-Wert (L$_{ACT}$, In$_{\_ACT}$, Mn$_{\_ACT}$) der physikalischen Größe größer als ein vorbestimmter Grenzwert ist,

wobei die physikalische Größe die Lage der mindestens einen Elektrode (22, 23) des Schweißwerkzeugs (21) ist und das Modell (511) eine modellierte Armaufbiegung (A$_B$) des Schweißwerkzeugs (21) umfasst, und/oder

wobei die physikalische Größe den Antriebstrom (In) einer Antriebseinrichtung (26) zum Antrieb der mindestens einen Elektrode (22, 23) des Schweißwerkzeugs (21) ist, und/oder

wobei die physikalische Größe ein Drehmoment (M) der Antriebseinrichtung (26) zum Antrieb der mindestens einen Elektrode (22, 23) des Schweißwerkzeugs (21) ist.

2. Vorrichtung (50; 50A; 50B) nach Anspruch 1, wobei der mindestens eine die Feder (211, 212, 213) bestimmende Parameter (k_E, Tt) eine Ersatzfederkonstante (k_E) ist, die mindestens eine Federkonstante (k_F1, kF2) in Bezug auf die mechanischen Eigenschaften des Schweißwerkzeugs (21) und eine Federkonstante (k_F3) in Bezug auf die Eigenschaften des mindestens einen zu schweißenden Bauteils (5, 6) aufweist.

3. Vorrichtung (50; 50A; 50B) nach Anspruch 1 oder 2, wobei der mindestens eine die Feder (211, 212, 213) bestimmende Parameter (k_E, Tt) eine Totzeit (Tt) ist, die nach Beaufschlagung des Schweißwerkzeugs (21) mit der Kraft (Fs(t); F$_{S\_ACT}$) den Kraftaufbau zum Herstellen der Schweißverbindung (7) verzögert.

4. Vorrichtung (50; 50A; 50B) nach einem der vorangehenden Ansprüche, wobei das Ermittlungsmodul (51) ausgestaltet ist, eine Änderung mindestens eines die Feder (211, 212, 213) bestimmenden Parameters (k_E, Tt) bei einem Schweißvorgang zu berücksichtigen.

5. Vorrichtung (50A; 50B) nach einem der vorangehenden Ansprüche,

wobei das Ermittlungsmodul (51) ausgestaltet ist, für mindestens zwei verschiedene physikalische Größen jeweils einen erwarteten Wert (L$_E$, I$_E$, M$_E$) zu ermitteln, und

wobei das Vergleichsmodul (51) ausgestaltet ist, den Vergleich für die mindestens zwei verschiedenen physikalischen Größen auszuführen, um den bei dem Schweißvorgang mit dem Schweißwerkzeug (21) erfassten Ist-Wert der Kraft (Fs(t); F$_{S\_ACT}$) zu plausibilisieren.

6. Vorrichtung (50; 50A; 50B) nach Anspruch 5, wobei die Vorrichtung (50; 50A; 50B) ausgestaltet ist, eine vorbestimmte Gewichtung des Vergleichs für die mindestens zwei verschiedenen physikalischen Größen zu verwenden, um zu bestimmen, ob zunächst nur eine Warnmeldung als Meldung (48) auszugeben ist.

7. Vorrichtung (50; 50A; 50B) nach Anspruch 6, wobei die Vorrichtung (50; 50A; 50B) ausgestaltet ist, eine Meldung (48) zum Abrechen des Schweißvorgangs erst auszugeben, wenn der Vergleich für mindestens zwei verschiedene physikalische Größen den Ist-Wert der Kraft (Fs(t); F$_{S\_ACT}$) nicht plausibilisiert.

8. Schweißsteuerung (10) für ein Schweißwerkzeug (21), mit

einem Kraftregelmodul (12) zum Regeln eines Verlaufs einer Kraft (F$_S$(t); F$_{S\_ACT}$), welche mindestens eine Elektrode (22, 23) eines Schweißwerkzeugs (21) beim Herstellen einer Schweißverbindung (7) auf mindestens ein Bauteil (5, 6) ausübt, und

einer Vorrichtung (50; 50A; 50B) nach einem der vorangehenden Ansprüche.

9. Schweißsteuerung (10) nach Anspruch 8, wobei die Schweißsteuerung (10) ausgestaltet ist, einen Schweißvorgang abzubrechen, wenn die Vorrichtung (50; 50A; 50B) einen bei einem Schweißvorgang mit dem Schweißwerkzeug (21) erfassten Ist-Wert der Kraft (Fs(t); $F_{S\_ACT}$) nicht plausibilisieren kann.

10. Schweißsteuerung (10) nach Anspruch 9,

zudem mit einem Einstellmodul (11) zur Auswertung der Regelung des Kraftregelmoduls (12),
wobei das Einstellmodul (11) ausgestaltet ist, das Schweißwerkzeug (21) als Feder (211, 212, 213) zu modellieren und mindestens einen Reglerparameter (120) des Kraftregelmoduls (12) auf der Grundlage von mindestens einem die Feder (211, 212, 213) bestimmenden Parameter (k_E, Tt) einzustellen.

11. Schweißanlage (2), mit

einem Schweißwerkzeug (21), das mindestens eine Elektrode (22, 23) zum Herstellen einer Schweißverbindung (7) an mindestens einem Bauteil (5, 6) aufweist,
einer Schweißsteuerung (10) zur Steuerung eines Herstellens einer Schweißverbindung (7) mit dem Schweißwerkzeug (21), und
einer Vorrichtung (50; 50A; 50B) nach einem der Ansprüche 1 bis 7.

12. Schweißanlage (2) nach Anspruch 11, wobei die Schweißsteuerung (10) ausgestaltet ist, einen Schweißvorgang abzubrechen, wenn die Vorrichtung (50; 50A; 50B) einen bei einem Schweißvorgang mit dem Schweißwerkzeug (21) erfassten Ist-Wert der Kraft (Fs(t); $F_{S\_ACT}$) nicht plausibilisieren kann.

13. Schweißanlage (2) nach Anspruch 11 oder 12, zudem mit einer Vorrichtung (20) zum Führen des Schweißwerkzeugs (21), wobei die Vorrichtung (20) als Roboter ausgestaltet ist.

14. Verfahren zur Plausibilisierung von Kraftwerten bei der Steuerung eines Schweißwerkzeugs (21), wobei das Schweißwerkzeug (21) ein Widerstandsschweißwerkzeug ist, das als Schweißzange mit zwei Elektroden (22, 23) ausgestaltet ist, wobei das Verfahren mit einer Vorrichtung (50; 50A; 50B) für eine Schweißsteuerung (10) ausgeführt wird und die Schritte aufweist

Ermitteln (S1), mit einem Ermittlungsmodul (51), eines erwarteten Werts ($L_E$, $I_E$, $M_E$) einer physikalischen Größe, die bei einem Schweißvorgang mit einem Schweißwerkzeug (21) auftritt und abhängig von einer Kraft ($F_S(t)$; $F_{S\_ACT}$) ist, welche mindestens eine Elektrode (22, 23) des Schweißwerkzeugs (21) beim Herstellen einer Schweißverbindung (7) auf mindestens ein Bauteil (5, 6) ausübt, und
Vergleichen (S2), mit einem Vergleichsmodul (52), des erwarteten Werts ($L_E$, $I_E$, $M_E$) mit einem Ist-Wert ($L_{ACT}$, $In\_{ACT}$, $Mn\_{ACT}$) der physikalischen Größe, die bei dem Schweißvorgang mit dem Schweißwerkzeug (21) auftritt, um einen bei dem Schweißvorgang mit dem Schweißwerkzeug (21) erfassten Ist-Wert der Kraft (Fs(t); $F_{S\_ACT}$) zu plausibilisieren,
wobei das Ermittlungsmodul (51) den erwarteten Wert ($L_E$, $I_E$, $M_E$) mit einem Modell (511) des Schweißwerkzeugs (21) ermittelt,
wobei das Modell (511) das Schweißwerkzeug (21) als Feder (211, 212, 213) modelliert und mindestens einen die Feder (211, 212, 213) bestimmenden Parameter (k_E, Tt) aufweist,
wobei das Vergleichsmodul (52) den Schweißvorgang abbricht und optional eine Fehlermeldung als Meldung (48) an die Schweißsteuerung (10) ausgibt, wenn eine Differenz aus erwarteten Wert ($L_E$, $I_E$, $M_E$) und Ist-Wert ($L_{ACT}$, $In\_{ACT}$, $Mn\_{ACT}$) der physikalischen Größe größer als ein vorbestimmter Grenzwert ist,
wobei die physikalische Größe die Lage der mindestens einen Elektrode (22, 23) des Schweißwerkzeugs (21) ist/umfasst und das Modell (511) eine modellierte Armaufbiegung ($A_B$) des Schweißwerkzeugs (21) umfasst, und/oder
wobei die physikalische Größe den Antriebstrom (In) einer Antriebseinrichtung (26) zum Antrieb der mindestens einen Elektrode (22, 23) des Schweißwerkzeugs (21) umfasst, und/oder
wobei die physikalische Größe ein Drehmoment (M) der Antriebseinrichtung (26) zum Antrieb der mindestens einen Elektrode (22, 23) des Schweißwerkzeugs (21) umfasst.

**Claims**

1. Device (50; 50A; 50B) for a welding control (10), with a determining module (51) for determining an expected value

($L_E$, $I_E$, $M_E$) of a physical variable which occurs during a welding operation with a welding tool (21) and is dependent on a force ($F_S(t)$; $F_{S\_ACT}$) which at least one electrode (22, 23) of the welding tool (21) exerts on at least one component (5, 6) when producing a welded connection (7), wherein the welding tool (21) is a resistance welding tool which is designed as a welding gun with two electrodes (22, 23), and

a comparing module (52) for comparing the expected value ($L_E$, $I_E$, $M_E$) with an actual value ($L_{ACT}$, $In_{\_ACT}$, $Mn_{\_ACT}$) of the physical variable which occurs during the welding operation with the welding tool (21) in order to validate the plausibility of an actual value of the force ($F_S(t)$; $F_{S\_ACT}$) recorded during the welding operation with the welding tool (21),

wherein the determining module (51) is designed to determine the expected value ($L_E$, $I_E$, $M_E$) with a model (511) of the welding tool (21),

wherein the model (511) models the welding tool (21) as a spring (211, 212, 213) and has at least one parameter ($k\_E$, $Tt$) determining the spring (211, 212, 213),

wherein the comparing module (52) is designed to discontinue the welding operation and optionally output an error message as a message (48) to the welding control (10) if a difference between the expected value ($L_E$, $I_E$, $M_E$) and the actual value ($L_{ACT}$, $In_{\_ACT}$, $Mn_{\_ACT}$) of the physical variable is greater than a predetermined limit value,

wherein the physical variable is the position of the at least one electrode (22, 23) of the welding tool (21) and the model (511) comprises a modelled upward arm bending ($A_B$) of the welding tool (21), and/or

wherein the physical variable is the drive current ($In$) of a drive device (26) for driving the at least one electrode (22, 23) of the welding tool (21), and/or wherein the physical variable is a torque ($M$) of the drive device (26) for driving the at least one electrode (22, 23) of the welding tool (21).

2. Device (50; 50A; 50B) according to Claim 1, wherein the at least one parameter ($k\_E$, $Tt$) determining the spring (211, 212, 213) is an equivalent spring constant ($k\_E$), which has at least a spring constant ($k\_F1$, $k\_F2$) with respect to the mechanical properties of the welding tool (21) and a spring constant ($k\_F3$) with respect to the properties of the at least one component (5, 6) to be welded.

3. Device (50; 50A; 50B) according to Claim 1 or 2, wherein the at least one parameter ($k\_E$, $Tt$) determining the spring (211, 212, 213) is a dead time ($Tt$), which delays the force buildup for producing the welded connection (7) after application of the force ($F_S(t)$; $F_{S\_ACT}$) to the welding tool (21).

4. Device (50; 50A; 50B) according to one of the preceding claims, wherein the determining module (51) is designed to take into account a change in at least one parameter ($k\_E$, $Tt$) determining the spring (211, 212, 213) during a welding operation.

5. Device (50A; 50B) according to one of the preceding claims,

wherein the determining module (51) is designed to determine an expected value ($L_E$, $I_E$, $M_E$) respectively for at least two different physical variables, and

wherein the comparing module (51) is designed to perform the comparison for the at least two different physical variables in order to validate the plausibility of the actual value of the force ($F_S(t)$; $F_{S\_ACT}$) recorded during the welding operation with the welding tool (21).

6. Device (50; 50A; 50B) according to Claim 5, wherein the device (50; 50A; 50B) is designed to use a predetermined weighting of the comparison for the at least two different physical variables in order to determine whether at first only a warning message is to be output as a message (48).

7. Device (50; 50A; 50B) according to Claim 6, wherein the device (50; 50A; 50B) is designed only to output a message (48) to discontinue the welding operation if the comparison does not validate the plausibility of the actual value of the force ($F_S(t)$; $F_{S\_ACT}$) for at least two different physical variables.

8. Control device (10) for a welding tool (21), with a force control module (12) for controlling a progression of a force ($F_S(t)$; $F_{S\_ACT}$), which at least one electrode (22, 23) of a welding tool (21) exerts on at least one component (5, 6) when producing a welded connection (7), and
a device (50; 50A; 50B) according to one of the preceding claims.

9. Welding control (10) according to Claim 8, wherein the welding control (10) is designed to discontinue a welding operation if the device (50; 50A; 50B) cannot validate the plausibility of an actual value of the force ($F_S(t)$; $F_{S\_ACT}$) recorded during a welding operation with the welding tool (21).

10. Welding control (10) according to Claim 9,

also with a setting module (11) for evaluating the feedback control of the force control module (12), wherein the setting module (11) is designed to model the welding tool (21) as a spring (211, 212, 213) and to set at least one controller parameter (120) of the force control module (12) on the basis of at least one parameter ($k\_E$, $Tt$) determining the spring (211, 212, 213).

11. Welding installation (2), with

a welding tool (21), which has at least one electrode (22, 23) for producing a welded connection (7) on at least one component (5, 6), a welding control (10) for controlling a production of a welded connection (7) with the welding tool (21), and
a device (50; 50A; 50B) according to one of Claims 1 to 7.

12. Welding installation (2) according to Claim 11, wherein the welding control (10) is designed to discontinue a welding operation if the device (50; 50A; 50B) cannot validate the plausibility of an actual value of the force ($F_S(t)$; $F_{S\_ACT}$) recorded during a welding operation with the welding tool (21).

13. Welding installation (2) according to Claim 11 or 12, also with a device (20) for guiding the welding tool (21), wherein the device (20) is designed as a robot.

14. Method for validating the plausibility of force values during the control of a welding tool (21), wherein the welding tool (21) is a resistance welding tool which is designed as a welding gun with two electrodes (22, 23), wherein the method is performed with a device (50; 50A; 50B) for a welding control (10) and has the steps of

determining (S1), with a determining module (51), an expected value ($L_E$, $I_E$, $M_E$) of a physical variable which occurs during a welding operation with a welding tool (21) and is dependent on a force ($F_S(t)$; $F_{S\_ACT}$) which at least one electrode (22, 23) of the welding tool (21) exerts on at least one component (5, 6) when producing a welded connection (7), and
comparing (S2), with a comparing module (52), the expected value ($L_E$, $I_E$, $M_E$) with an actual value ($L_{ACT}$, $In\_ACT$, $Mn\_ACT$) of the physical variable which occurs during the welding operation with the welding tool (21) in order to validate the plausibility of an actual value of the force ($F_S(t)$; $F_{S\_ACT}$) recorded during the welding operation with the welding tool (21),
wherein the determining module (51) determines the expected value ($L_E$, $I_E$, $M_E$) with a model (511) of the welding tool (21),
wherein the model (511) models the welding tool (21) as a spring (211, 212, 213) and has at least one parameter ($k\_E$, $Tt$) determining the spring (211, 212, 213),
wherein the comparing module (52) discontinues the welding operation and optionally outputs an error message as a message (48) to the welding control (10) if a difference between the expected value ($L_E$, $I_E$, $M_E$) and the actual value ($L_{ACT}$, $In\_ACT$, $Mn\_ACT$) of the physical variable is greater than a predetermined limit value,
wherein the physical variable is/comprises the position of the at least one electrode (22, 23) of the welding tool (21) and the model (511) comprises a modelled upward arm bending ($A_B$) of the welding tool (21), and/or
wherein the physical variable comprises the drive current (In) of a drive device (26) for driving the at least one electrode (22, 23) of the welding tool (21), and/or
wherein the physical variable comprises a torque (M) of the drive device (26) for driving the at least one electrode (22, 23) of the welding tool (21).

**Revendications**

1. Dispositif (50 ; 50A ; 50B) de commande de soudage (10), comprenant un module d'établissement (51) pour établir une valeur attendue ($L_E$, $I_E$, $M_E$) d'une grandeur physique qui se produit lors d'un processus de soudage avec un outil de soudage (21) et dépend d'une force ($F_S(t)$; $F_{S\_ACT}$) exercée par au moins une électrode (22, 23) de l'outil de soudage (21) sur au moins un composant (5, 6) lors de la réalisation d'un assemblage soudé (7), dans lequel l'outil de soudage (21) est un outil de soudage par résistance qui est configuré comme une pince à souder avec deux électrodes (22, 23), et

un module de comparaison (52) pour comparer la valeur attendue ($L_E$, $I_E$, $M_E$) avec une valeur réelle ($L_{ACT}$, $In\_{ACT}$, $Mn\_{ACT}$) de la grandeur physique qui se produit lors du processus de soudage avec l'outil de soudage (21) afin de plausibiliser une valeur réelle de la force ($F_S(t)$; $F_{S\_ACT}$) détectée lors du processus de soudage avec l'outil de soudage (21),

dans lequel le module d'établissement (51) est configuré pour établir la valeur attendue ($L_E$, $I_E$, $M_E$) par un modèle (511) de l'outil de soudage (21),

dans lequel le modèle (511) modélise l'outil de soudage (21) comme un ressort (211, 212, 213) et présente au moins un paramètre ($k\_E$, $Tt$) déterminant le ressort (211, 212, 213),

dans lequel le module de comparaison (52) est configuré pour abandonner le processus de soudage et pour sortir en option un message d'erreur en tant que message (48) destiné à la commande de soudage (10) si une différence entre la valeur attendue ($L_E$, $I_E$, $M_E$) et la valeur réelle ($L_{ACT}$, $In\_{ACT}$, $Mn\_{ACT}$) de la grandeur physique est supérieure à une valeur limite prédéterminée,

dans lequel la grandeur physique est la position de ladite au moins une électrode (22, 23) de l'outil de soudage (21), et le modèle (511) comprend une longueur utile des bras ($A_B$) modélisée de l'outil de soudage (21), et/ou

dans lequel la grandeur physique est le courant d'entraînement ($In$) d'un dispositif d'entraînement (26) pour entraîner au moins une électrode (22, 23) de l'outil de soudage (21), et/ou

dans lequel la grandeur physique est un couple ($M$) du dispositif d'entraînement (26) pour entraîner ladite au moins une électrode (22, 23) de l'outil de soudage (21).

2. Dispositif (50 ; 50A ; 50B) selon la revendication 1, dans lequel ledit au moins un paramètre ($k\_E$, $Tt$) déterminant le ressort (211, 212, 213) est une constante de rappel fictive ($k\_E$) qui présente au moins une constante de rappel ($k\_F1$, $k\_F2$) concernant les propriétés mécaniques de l'outil de soudage (21) et une constante de rappel ($k\_F3$) concernant les propriétés dudit au moins un composant (5, 6) à souder.

3. Dispositif (50 ; 50A ; 50B) selon la revendication 1 ou 2, dans lequel ledit au moins un paramètre ($k\_E$, $Tt$) déterminant le ressort (211, 212, 213) est un temps mort ($Tt$) qui retarde le développement de la force pour créer l'assemblage soudé (7) après que l'outil de soudage (21) a été soumis à la force ($F_S(t)$; $F_{S\_ACT}$).

4. Dispositif (50 ; 50A ; 50B) selon l'une quelconque des revendications précédentes, dans lequel le module d'établissement (51) est configuré pour tenir compte lors d'un processus de soudage d'un changement d'au moins un paramètre ($k\_E$, $Tt$) déterminant le ressort (211, 212, 213) .

5. Dispositif (50A ; 50B) selon l'une quelconque des revendications précédentes,

dans lequel le module d'établissement (51) est configuré pour établir respectivement une valeur attendue ($L_E$, $I_E$, $M_E$) pour au moins deux grandeurs physiques différentes, et

dans lequel le module de comparaison (51) est configuré pour effectuer la comparaison pour lesdites au moins deux grandeurs physiques différentes pour plausibiliser la valeur réelle de la force ($F_S(t)$; $F_{S\_ACT}$), détectée lors du processus de soudage avec l'outil de soudage (21).

6. Dispositif (50 ; 50A ; 50B) selon la revendication 5, dans lequel le dispositif (50 ; 50A ; 50B) est configuré pour utiliser une pondération prédéterminée de la comparaison pour lesdites au moins deux grandeurs physiques différentes afin de déterminer s'il faut d'abord seulement sortir un avertissement en tant que message (48).

7. Dispositif (50 ; 50A ; 50B) selon la revendication 6, dans lequel le dispositif (50 ; 50A ; 50B) est configuré pour sortir un message (48) pour abandonner le processus de soudage seulement lorsque la comparaison pour lesdites au moins deux grandeurs physiques différentes ne plausibilise pas la valeur réelle de la force ($F_S(t)$; $F_{S\_ACT}$).

8. Commande de soudage (10) pour un outil de soudage (21), comprenant

un module de régulation de force (12) pour réguler une courbe d'une force ($F_S(t)$; $F_{S\_ACT}$) exercée par au moins une électrode (22, 23) d'un outil de soudage (21) sur au moins un composant (5, 6) lors de la création d'un assemblage soudé (7), et

un dispositif (50 ; 50A ; 50B) selon l'une des revendications précédentes.

9. Commande de soudage (10) selon la revendication 8, dans laquelle la commande de soudage (10) est configurée pour abandonner un processus de soudage si le dispositif (50 ; 50A ; 50B) ne peut pas plausibiliser une valeur réelle de la force ($F_S(t)$; $F_{S\_ACT}$), détectée lors d'un processus de soudage avec l'outil de soudage (21).

10. Commande de soudage (10) selon la revendication 9, comprenant en outre un module de réglage (11) pour évaluer la régulation du module de régulation de force (12),
dans laquelle le module de réglage (11) est configuré pour modéliser l'outil de soudage (21) comme un ressort (211, 212, 213) et pour régler au moins un paramètre de régulateur (120) du module de régulation de force (12) sur la base d'au moins un paramètre ($k\_E$, Tt) déterminant le ressort (211, 212, 213).

11. Installation de soudage (2), comprenant

un outil de soudage (21) qui présente au moins une électrode (22, 23) pour créer un assemblage soudé (7) au niveau d'au moins un composant (5, 6),
une commande de soudage (10) pour commander la création d'un assemblage soudé (7) avec l'outil de soudage (21), et
un dispositif (50 ; 50A ; 50B) selon l'une quelconque des revendications 1 à 7.

12. Installation de soudage (2) selon la revendication 11, dans laquelle la commande de soudage (10) est configurée pour abandonner un processus de soudage si le dispositif (50 ; 50A ; 50B) ne peut pas plausibiliser une valeur réelle de la force ($F_S(t)$; $F_{S\_ACT}$) détectée lors d'un processus de soudage avec l'outil de soudage (21).

13. Installation de soudage (2) selon la revendication 11 ou 12, comprenant en outre un dispositif (20) pour guider l'outil de soudage (21), le dispositif (20) étant configuré comme un robot.

14. Procédé permettant de plausibiliser des valeurs de force lors de la commande d'un outil de soudage (21), dans lequel l'outil de soudage (21) est un outil de soudage par résistance qui est configuré comme une pince à souder avec deux électrodes (22, 23), le procédé étant effectué par un dispositif (50 ; 50A ; 50B) de commande de soudage (10) et présentant les étapes consistant à établir (S1), par un module d'établissement (51), une valeur attendue ($L_E$, $I_E$, $M_E$) d'une grandeur physique qui apparaît lors d'un processus de soudage avec un outil de soudage (21) et dépend d'une force ($F_S(t)$; $F_{S\_ACT}$) qui est exercée par au moins une électrode (22, 23) de l'outil de soudage (21) sur au moins un composant (5, 6) lors de la création d'un assemblage soudé (7), et

comparer (S2), par un module de comparaison (52), la valeur attendue ($L_E$, $I_E$, $M_E$) avec une valeur réelle ($L_{ACT}$, $In\_{ACT}$, $Mn\_{ACT}$) de la grandeur physique qui se produit lors du processus de soudage avec l'outil de soudage (21) afin de plausibiliser une valeur réelle de la force ($F_S(t)$; $F_{S\_ACT}$) détectée lors du processus de soudage avec l'outil de soudage (21),
dans lequel le module d'établissement (51) établit la valeur attendue ($L_E$, $I_E$, $M_E$) par un modèle (511) de l'outil de soudage (21),
dans lequel le modèle (511) modélise l'outil de soudage (21) comme un ressort (211, 212, 213) et présente au moins un paramètre ($k\_E$, Tt) déterminant le ressort (211, 212, 213),
dans lequel le module de comparaison (52) abandonne le processus de soudage et sort en option un message d'erreur en tant que message (48) destiné à la commande de soudage (10) si une différence entre la valeur attendue ($L_E$, $I_E$, $M_E$) et la valeur réelle ($L_{ACT}$, $In\_{ACT}$, $Mn\_{ACT}$) de la grandeur physique est supérieure à une valeur limite prédéterminée,
dans lequel la grandeur physique est/comprend la position de ladite au moins une électrode (22, 23) de l'outil de soudage (21), et le modèle (511) comprend une longueur utile des bras ($A_B$) modélisée de l'outil de soudage (21), et/ou
dans lequel la grandeur physique comprend le courant d'entraînement (In) d'un dispositif d'entraînement (26) pour entraîner au moins une électrode (22, 23) de l'outil de soudage (21), et/ou
dans lequel la grandeur physique comprend un couple (M) du dispositif d'entraînement (26) pour entraîner ladite au moins une électrode (22, 23) de l'outil de soudage (21) .

FIG. 1

FIG. 2

FIG. 3

210

211

k_F1

213

k_F3    k_E

212

k_F2

## FIG. 4

$F_{S\_ACT}$

3000

2500

2000

1500

1000

500

0

5    10    10    20    25    t

Tt

## FIG. 5

FIG. 6

FIG. 7

FIG. 8

FIG. 9

EP 3 854 510 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1582285 A2
- GB 2560999 A
- US 20040112874 A1